# EUROPEAN PATENT SPECIFICATION

(11) **EP 1 963 671 B1**
(45) Date of publication and mention of the grant of the patent: **08.02.2012**
(21) Application number: 06818148.6
(22) Date of filing: 05.12.2006
(51) Int. Cl.: F03D 11/00

(54) **Blade for a wind turbine rotor**
Rotorblatt für eine Windturbine
Pale pour rotor d aérogénérateur

(30) Priority: 05.12.2005 DK 200501714
(43) Date of publication of application: 03.09.2008
(73) Proprietor: LM GLASFIBER A/S, 6640 Lunderskov (DK)
(72) Inventor: GRABAU, Peter, 6000 Kolding (DK)
(74) Representative: Kitchen, Steven Richard
(86) International application number: PCT/DK2006/000689
(87) International publication number: WO 2007/065434

(56) References cited:
- EP-A2- 1 219 837
- WO-A-00/15961
- WO-A-2005/035978
- DE-C- 420 325
- FR-A- 794 841
- GB-A- 2 372 018
- US-A1- 2 800 291

## Description

### Technical Field

The present invention relates to a blade for a wind turbine rotor having a substantially horizontal rotor shaft, said rotor comprising a hub, where, seen in longitudinal direction along a longitudinal axis, the blade comprises a root area closest to the hub, an airfoil area furthest away from the hub and optionally a transition area between the root area and the airfoil area, and where, seen in transverse direction, said blade comprises a leading edge and a trailing edge as well as a chord plane extending between the leading edge and the trailing edge of the blade, wherein the root area has a substantially circular cross-section.

### Background Art

Ideally, a blade of the airfoil type is shaped like a typical aeroplane wing, where the chord plane width of the blade as well as the first derivative thereof increase continuously with decreasing distance to the hub. This results in the blade, ideally, being comparatively wide in the vicinity of the hub. This again results in problems when having to mount the blade to the hub, and, moreover, this causes great loads when the blade is mounted, such as storm loads, due to the large surface area of the blade.

Therefore, over the years, the construction of blades has developed towards a shape, where the blade consists of a root area closest to the hub, an airfoil area furthest away from the hub and optionally a transition area between the root area and the airfoil area. The airfoil area has an ideal or almost ideal blade shape, whereas the root area has a substantially circular cross-section reducing the storm loads and making it easier and more safe to mount the blade to the hub. The root area diameter is preferably constant along the entire root area. Due to the circular cross-section, the root area does not contribute to the production of the wind turbine and, in fact, lowers the production a little because of wind resistance. As is suggested by the name, the transition area has a shape gradually changing from the circular shape of the root area to the airfoil profile of the airfoil area. Typically, the width of the transition area increases substantially linearly with increasing distance from the hub. Such a wind turbine blade is examplary disclosed in WO 2005/035978.

It is well known in golf that a golf ball with indentations (so-called dimples) is able to fly further than a golf ball with a smooth surface. This is due to the reduction in aerodynamic wind resistance the golf ball experiences when flying through the air. The golf ball is exposed to two types of wind resistance. The first type is due to friction when the ball moves through the air, but friction alone accounts only for a small part of the total wind resistance the golf ball experiences. A major part of the wind resistance arises from a separation of the airflow behind the ball, which is referred to as pressure loss due to separation.

The larger the separation behind the golf ball, the larger the pressure loss behind the golf ball. Thus, the differential pressure between the front and the rear of the ball increases and therefore also the wind resistance the golf ball experiences.

In the case of laminar airflow past a sphere, the separation behind the golf ball is comparatively large, while the separation is considerably smaller for a turbulent airflow. Therefore, golf balls have dimples, which causes the airflow around the golf ball to change from laminar to turbulent, which again makes the air flow "stick" to the surface of the golf ball for a longer period and reduces the separation behind the golf ball.

### Disclosure of Invention

The object of the invention is to provide a new and improved construction for wind turbine blades.

According to the invention, this object is achieved by a surface zone with a plurality of indentations and/or projections being provided in at least the root area, said indentations and/or projections being formed and dimensioned to improve the wind flow across the surface of the blade, i.e. reducing the separation behind the trailing edge of the blade (or root area) during rotation of the rotor. The principles known from the golf ball with respect to creating a turbulent air flow are thus utilised. In this way, the aerodynamic air resistance of the root part is reduced, thus allowing for an increase in wind turbine production and a reduction of storm loads on the blade. This is particularly applicable for especially large blades and blades with hub extenders. Preferably, the surface zone comprises a large number of indentations and/or projections.

Preferably, the blade is made as a shell body made of fibre-reinforced polymer.

According to a preferred embodiment of the blade according to the invention, the surface zone extends substantially along the entire length of the root area. Thus, the air resistance is reduced along the entire length of the root area.

According to a suitable embodiment, the root area has a substantially circular cross-section. In this way, it is easier to anchor the blade to the hub.

According to a particular embodiment, the surface zone comprises a first zone segment and a second zone segment, seen in angular direction, where the first and the second zone segment extend at least from 30 to 150 degrees and -30 to -150 degrees, respectively, or from 60 to 135 degrees and -60 to -135 degrees, respectively, or from 60 to 120 degrees and -60 to -120 degrees, respectively, where the line from the longitudinal axis to the leading edge is defined as 0 degrees, and the line from the longitudinal axis to the trailing edge is defined as 180 degrees (or -180 degrees). However, the indentations and/or projections may be arranged along the entire angular direction, i.e. from -180 degrees to -180 degrees

0 degrees with respect to the longitudinal axis may also be defined based on the resulting wind direction experienced by the root area. Since the resulting wind direction is a cumulative vector of the actual wind velocity and the local velocity of the blade, the optimum position of the first and the second zone segment is dependent on the distance from the hub. Thus, the positions of the two zone segments may be twisted in longitudinal direction in the same way the chord plane of a blade is often twisted in the longitudinal direction of the blade.

According to a particular embodiment of the invention, the surface zone extends into the transition area. In particular, the surface zone extends at least into the area of the transition area closest to the hub, and preferably extends along substantially the entire longitudinal direction of the transition area.

According to a preferred embodiment, the surface zone(s) extend only along the inner 50%, or 35%, or 20%, or 10% of the blade radius.

According to a suitable embodiment, the first zone segment and the second zone segment in the transition area are located around the point transverse to the chord plane, where the profile of the transition area has the greatest thickness.

According to an alternative embodiment, at least one portion of the airfoil area situated closest to the hub and thus experiencing the lowest resulting wind velocity is provided with a plurality of indentations and/or projections.

According to an alternative embodiment, the plurality of indentations and/or projections is provided in the root area only.

According to a preferred embodiment of the blade according to the invention, the surface zone comprises a plurality of substantially uniform indentations or projections.

According to a particularly preferred embodiment, the surface zone comprises a plurality of substantially circular, concave indentations. This corresponds to the dimples on a golf ball.

The surface zone may also comprise a plurality of hexagonal indentations, which allows a further reduction of air resistance. Of course, the surface zone may also comprise a combination of indentations or projections having various shapes, such as any polygonial shape.

Furthermore, the indentations and/or projections may be of different sizes. The sizes may be selected dependent on the local velocity of the blade, which may mean for example that the individual areas and depths/heights of the indentations increase with increasing distance from the hub.

The indentations and/or projections may be arranged according to a predetermined pattern or, alternatively, the mutual positions of the indentations and/or projections may be random.

According to a particular embodiment, the indentations and/or projections have a width of 2-100 mm, 3-50 mm or 4-20 mm and a depth of 1-20 mm, 1-10 or 1-5 mm.

According to a preferred embodiment of the invention, the indentations are recessed on the surface of the blade. Thus, the surface structure may be established during the moulding process for the blade.

Alternatively, the indentations and/or projections may be a part of a covering, such as a tape or a film, provided on the surface of the blade. This allows the manufacture of blades by means of existing moulds, and the surface of the blade is supplied with said covering first after the blade has been moulded.

According to the invention, the object is also achieved by a film or foil for covering the surface of a blade having a first face adapted to be fastened, e.g. by means of gluing, - to the surface of the blade, and having a second face, which when said film is fastened to the blade, faces away from the surface of the blade, where the second face of the film is provided with a plurality of indentations and/or projections.

### Brief Description of the Drawings

The invention is explained in greater detail below by way of embodiments which are shown in the drawings, in which
Fig. 1 shows a top view of an ideal blade of the airfoil type,
Fig. 2 shows a perspective view of a conventional blade of the airfoil type, and
Fig. 3a and 3b show the airflow over a smooth sphere and a sphere having indentations on the surface, respectively,
Fig. 4 shows a first embodiment of a blade according to the invention,
Fig. 5 shows a cross-section through the root area of a second embodiment of a blade according to the invention, and
Fig. 6 shows a cross-section through the transition area of a second embodiment of a blade according to the invention.

### Best Modes for Carrying out the Invention

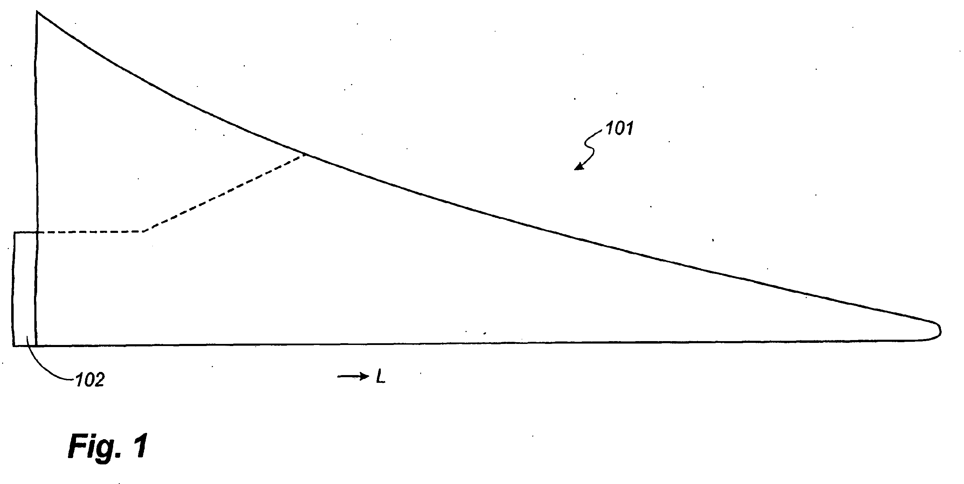

Fig. 1 shows an embodiment of an ideal blade 101 of the airfoil type. The blade is provided with a root part 102 adapted to be secured to a hub of a wind turbine. The ideal blade 101 is designed such that the width of the blade 101 decreases with increasing distance L from the hub. Furthermore, the first derivative of the width of the depicted blade 101 also decreases with increasing distance from the hub 101, which means that, ideally, the blade 101 is very wide at the root area 102. This causes problems with respect to securing the blade 101 to the hub. Moreover, when mounted, the blade 101 impacts the hub with large storm loads because of the large surface area of the blade 101.

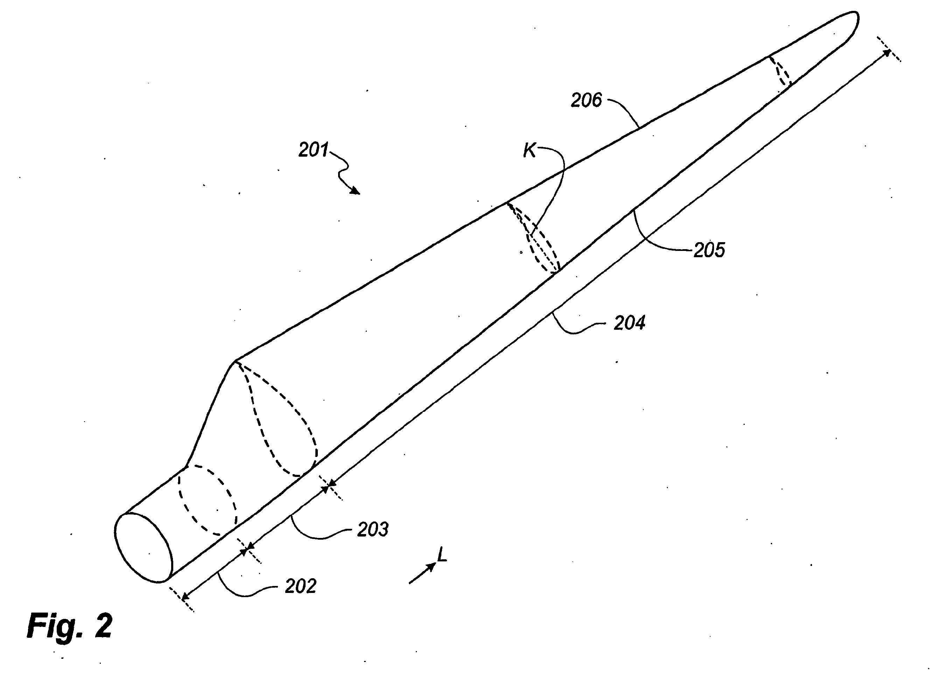

Therefore, over the years, the construction of blades has developed towards a shape, where the outer part of the blade corresponds to the ideal blade 101, whereas the surface area of the root area is substantially reduced compared to the ideal blade. This embodiment is illustrated with a dashed line in Fig. 1, a perspective view thereof being shown in Fig. 2.

As seen from Fig. 2, the conventional blade 201 comprises a root area 202 closest to the hub, an airfoil area 204 furthest away from the hub and a transition area 203 between the root area 202 and the airfoil area 204. The blade 201 comprises a leading edge 205 facing the direction of rotation of the blade 201, when the blade is mounted on the hub, and a trailing edge 206 facing in the opposite direction to the leading edge 205. The airfoil area 204 has an ideal or almost ideal blade shape, whereas the root area 202 has a substantially circular cross-section, which reduces storm loads and makes it easier and more safe to mount the blade 201 to the hub. Preferably, the diameter of the root area 202 is constant along the entire root area 202. The transition area 203 has a shape gradually changing from the circular shape of the root area 202 to the airfoil profile of the airfoil area 204. The width of the transition area 203 increases substantially linearly with increasing distance L from the hub.

The airfoil area 204 has an airfoil profile with a chord plane K extending between the leading edge 205 and the trailing edge 206 of the blade 201. The width of the chord plane decreases with increasing distance L from the hub. It should be noted that the chord plane does not necessarily run straight over its entire extent, since the blade may be twisted and/or curved, thus providing the chord plane with a correspondingly twisted and/or curved course, this being most often the case in order to compensate for the local velocity of the blade being dependent on the radius from the hub.

Due to the circular cross-section, the root area 202 does not contribute to the production of the wind turbine and, in fact, lowers the production a little because of wind resistance.

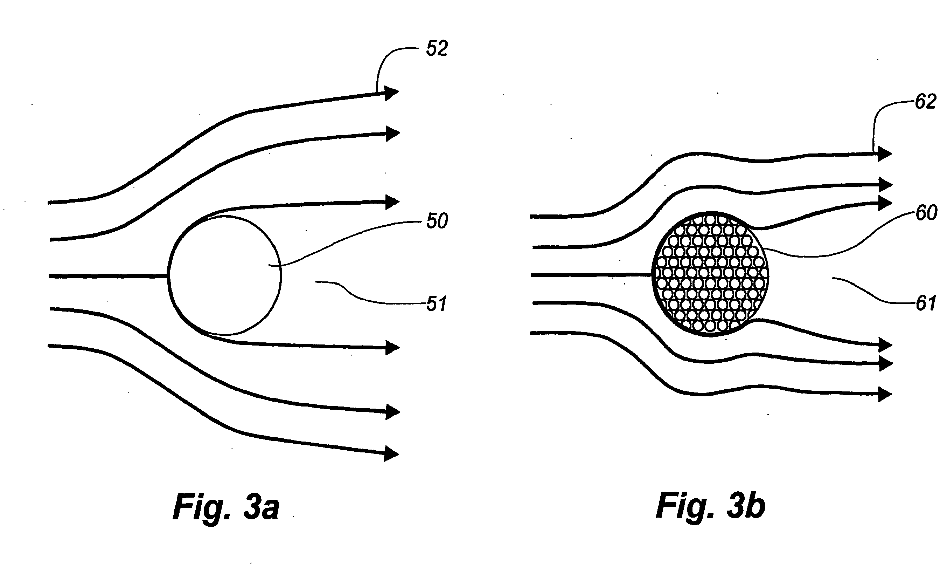

Fig. 3a shows a laminar airflow 52 past a sphere 50, while Fig. 3b shows a turbulent airflow 62 past a sphere 60 with dimples. With laminar airflow 52, the separation 51 behind the sphere 50 is comparatively large. Therefore, there is a great pressure drop behind the sphere, and thus the differential pressure between the front and the rear of the sphere 50 is correspondingly large. Said differential pressure causes a force to act on the rear of the sphere. With turbulent air flow 62, the separation 61 behind the sphere 60 is considerably smaller, and thus the differential pressure between the front and the rear of the sphere 60 is considerably smaller, and therefore the force acting towards the rear of the sphere is also smaller.

The reason why e.g. golf balls have a surface with indentations or so-called dimples is based on the desire to after the critical Reynolds number of the ball, which is the Reynolds number, where the flow changes from laminar to turbulent flow. For a smooth surface as shown in Fig. 3B, the critical Reynolds number is much higher than the average Reynolds number which a golf ball achieves when moving through the air.

For a golf ball having a sandblasted surface the decrease in wind resistance at the critical Reynolds number is larger than for a golf ball with dimples. But the wind resistance increases with increasing Reynolds number. However, a golf ball with dimples has a low critical Reynolds number and the resistance is substantially constant for Reynolds numbers higher than the critical Reynolds number.

In other words, the indentations ensure a decrease of the critical Reynolds number, which results in the flow becoming turbulent at lower wind velocities than with a smooth sphere. This makes the air flow "stick" to the surface of the golf ball for a longer period, which results in a decrease in wind resistance.

The idea behind the surface is to use this known effect to reduce the wind resistance particularly in those parts of the wind turbine blade, where the blade does not possess an ideal airfoil profile, according to the principles known form golf balls.

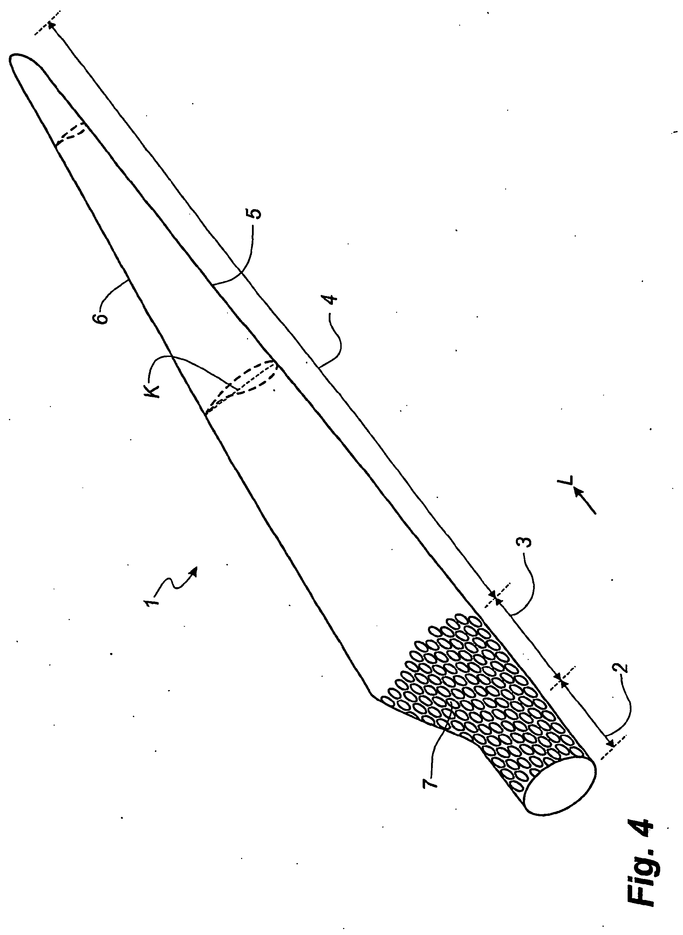

Fig. 4 shows a blade 1 according to the invention, where the root area 2 and the transition area 3 are provided with a plurality of indentations and/or projections 7. Below, these are referred to as indentations or dimples, but it is apparent that they may be both concave and convex (i.e. projections). The airfoil area of the blade 1 is not provided with indentations. The root area 2 is provided with indentations 7 along its entire longitudinal direction, and said indentations 7 are preferably arranged all the way around the circular root area 2. The transition area 3 is depicted as having indentations along its entire longitudinal direction. It is most important, however, that the area of the transition area 3 situated closest to the root area 2 is provided with indentations 7, since this point of the cross-sectional profile shows the greatest deviation from the ideal airfoil profile. It should be noted that for the sake of clarity the individual illustrated indentations 7 are drawn out of scale and larger in the figure, and that in reality they are often considerably smaller.

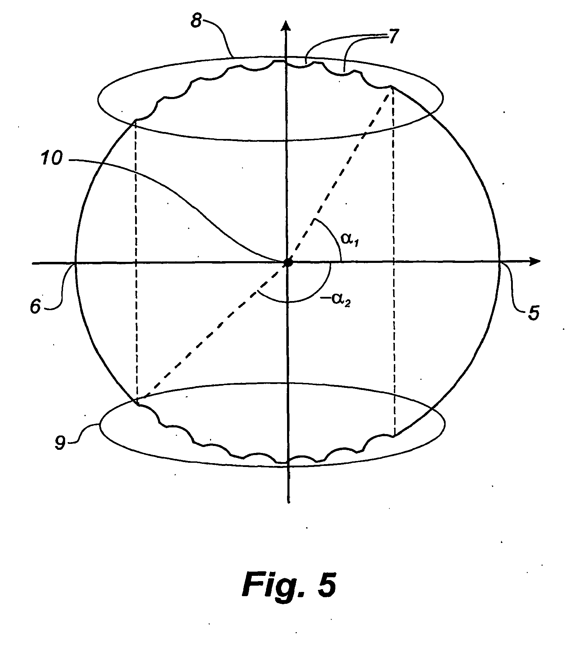

Preferably, the entire root area 2 is provided with dimples 7 in the angular direction. But since the direction of rotation of the blade is well-defined with respect to the wind direction (in contrast to golf balls), it may be sufficient to provide a first zone segment 8 and a second zone segment 9 with dimples: The zone segments 8, 9 may be arranged as shown in Fig. 5. The line from the longitudinal axis 10 of the blade 1 towards the leading edge 5 of the blade is defined has having an angle of 0 degree, whereas the line from the longitudinal axis 10 of the blade 1 towards the trailing edge of the blade is defined has having an angle of 180 degrees. The first zone segment 8 extends in the angular direction from the angle α₁ to the angle α₂, while the second zone segment 9 extends from the angle -α₁ to -α₂. Preferably, α₁ = 30 degrees and α₂= 150 degrees, but it may be sufficient that α₁ = 60 degrees and α₂ = 135 degrees and even sufficient that α₁ = 60 degrees and α₂ = 120 degrees.

Preferably, the chord plane K of the blade extending between the leading edge 5 and the trailing edge 6 of the blade 1 is oriented such that it follows the resulting local wind direction. Since this is dependent on the local velocity of the blade, the chord plane is preferably twisted in the longitudinal direction L of the blade 1. Thus, the local position of the two zone segments 8, 9 may also be twisted in the longitudinal direction L of the blade 1.

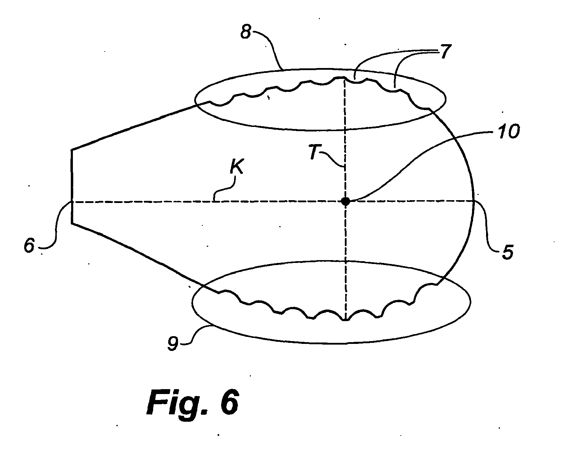

Fig. 6 shows a section through the transition area 3, where the trailing edge 6 of the profile may be more or less blunt or truncated. In the illustrated embodiment, the indentations 7 are again arranged in two different zone segments 8, 9. Preferably, said zone segments are situated around the points transverse to the chord plane K where the thickness T of the profile is greatest. But as in the root area 2, the indentations 7 are preferably arranged all the way around the transition area 3 or at least from the area, where the thickness T of the profile is greatest, all the way up to the trailing edge 6 of the blade 1.

For the sake of clarity, the indentations 7 illustrated in Fig. 5 and Fig. 6 are once again drawn out of scale and are preferably considerably smaller with respect to the size of the profile.

The indentations 7 are preferably shaped like circular, concave indentations corresponding to dimples on a golf ball. However, they may be triangular, rectangular, hexagonal or have any other polygonal shape. For example, a hexagonal shape reduces the wind resistance further compared to circular indentations. The indentations may also have varying shapes.

The indentations 7 may also have varying sizes. Preferably, the sizes are selected on the basis of the size of the blade 1 and the wind velocity the blade 1 is exposed to. Since the local speed of the blade 1 increases with increasing distance L from the hub, the resulting local wind velocity also increases with increasing distance from the hub. The size of the indentations 7 may thus be selected depending on the distance L from the hub. The mutual positions of the indentations 7 may be arranged after a predetermined pattern or may be random.

The indentations 7 may be formed during manufacture of the blade 1, that is, during the moulding process itself. They can also be recessed after moulding the blade. Alternatively, the indentations 7 are formed by subsequently covering the surface of the blade 1 with a tape or film with indentations.

It may be advantageous to reduce the storm loads on the tower of the wind turbine while reducing the storm loads on the wind turbine blades. Often, the tower is of substantially circular cross-section, and by providing in particular the uppermost part of the tower with a construction rotatably connected to the tower so that the cross-section of the tower together with said construction has the shape of a drag reduction profile, i.e. a substantially symmetrical drop shape, a considerable reduction in storm loads may be obtained, as shown by simulations. The construction must be rotatably connected to the tower in a way that it automatically orients itself with respect to the wind direction such that the "tip of the drop" points in the wind direction.

The invention has been described with reference to preferred embodiments. Many modifications are conceivable without thereby deviating from the scope of the invention, as defined by the appended claims.

### Reference numeral list

- 1, 101, 201: blade
- 2, 102, 202: root area
- 3, 203: transition area
- 4, 204: airfoil area
- 5, 205: leading edge
- 6, 206: trailing edge
- 7: indentations/projections, dimples
- 8: first zone segment
- 9: second zone segment
- 10: longitudinal axis
- 50: smooth sphere
- 51: separation
- 52: air flow
- 60: sphere with dimples
- 61: separation
- 62: air flow
- α₁: first angle
- α₂: second angle
- L: longitudinal direction
- K: chord plane
- T: thickness

## Claims

1. A blade (1) for a wind turbine rotor having a substantially horizontal rotor shaft, said rotor comprising a hub, where, seen in longitudinal direction along a longitudinal axis (10), the blade (1) comprises a root area (2) closest to the hub, an airfoil area (4) furthest away from the hub and optionally a transition area (3) between the root area (2) and the airfoil area (4), and where, seen in transverse direction, said blade (1) comprises a leading edge (5) and a trailing edge (6) as well as a chord plane (K) extending between the leading edge (5) and the trailing edge (6) of the blade (1), wherein the root area (2) has a substantially circular cross-section, **characterized in that** a surface zone with a plurality of indentations (7) and/or projections is provided in at least the root area (2), said indentations and/or projections being formed and dimensioned to improve the wind flow across the surface of the blade (1), wherein the surface zone in the longitudinal direction of the blade (1) extends substantially along the entire length of the root area (2).

2. A blade according to claim 1, wherein the surface zone comprises a plurality of indentations (7) and/or projections in the transverse direction of the blade.

3. A blade according to claim 1 or 2, wherein the surface zone comprises indentations, such as dimples, only.

4. A blade according to any one of claims 1-3, **characterized in that** the surface zone comprises a first zone segment (8) and a second zone segment (9), seen in angular direction, where the first (8) and the second (9) zone segment extend at least from 30 to 150 degrees and -30 to -150 degrees, respectively, or from 60 to 135 degrees and -60 to -135 degrees, respectively, or from 60 to 120 degrees and -60 to -120 degrees, respectively, where the line from the longitudinal axis (10) to the leading edge (5) is defined as 0 degrees, and the line from the longitudinal axis (10) to the trailing edge (6) is defined as 180 degrees.

5. A blade according to any one of claims 2-4, **characterized in that** the surface zone extends into the transition area (3).

6. A blade according to claim 4 or 5, **characterized in that** the first zone segment (8) and the second zone segment (9) in the transition area (3) are located around the point transverse to the chord plane (K), where the profile of the transition area (3) has the greatest thickness.

7. A blade according to claim 5 or 6, **characterized in that** at least one portion of the airfoil area (4) situated closest to the hub is provided with a plurality of indentations (7) and/or projections.

8. A blade according to any one of the preceding claim, **characterized in that** the surface zone comprises a plurality of substantially uniform indentations (7) or projections.

9. A blade according to any one of the preceding claims, **characterized in that** the surface zone comprises a plurality of substantially circular, concave indentations.

10. A blade according to any one of the preceding claims, **characterized in that** the surface zone comprises a plurality of hexagonal indentations.

11. A blade according to any one of the preceding claims, **characterized in that** the indentations (7) and/or projections have a width of 2-100 mm, 3-50 mm or 4-20 mm and a depth of 1-20 mm, 1-10 or 1-5 mm.

12. A blade according to any one of the preceding claims, **characterized in that** the indentations (7) are recessed on the surface of the blade (1).

13. A blade according to any one of claims 1-11, **characterized in that** the indentations (7) and/or projections are a part of a covering, such as a tape or a film, provided on the surface of the blade.

## Patentansprüche

1. Rotorblatt (1) für einen Windturbinenrotor mit einer im Wesentlichen horizontalen Rotorwelle, wobei der Rotor eine Nabe aufweist, wobei das Rotorblatt (1), bei Betrachtung in Längsrichtung längs der Längsachse (10), einen Wurzelbereich (2), der der Nabe am nächsten liegt, einen Tragflächenbereich (4), der von der Nabe am weitesten entfernt ist, und wahlweise einen Übergangsbereich (3) zwischen dem Wurzelbereich (2) und dem Tragflächenbereich (4) aufweist, und wobei das Rotorblatt (1), in Querrichtung gesehen, eine vordere Kante (5) und eine hintere Kante (6) sowie eine Sehnenebene (K) aufweist, die sich zwischen der vorderen Kante (5) und der hinteren Kante (6) des Rotorblatts (1) erstreckt, wobei der Wurzelbereich (2) einen im Wesentlichen kreisförmigen Querschnitt besitzt,
**dadurch gekennzeichnet,**
**dass** eine Oberflächenzone mit einer Vielzahl von Vertiefungen (7) und/oder Vorsprüngen zumindest in dem Wurzelbereich (2) vorgesehen ist, wobei die Vertiefungen und/oder Vorsprünge derart geformt und dimensioniert sind, dass sie die Windströmung über die Oberfläche des Rotorblatts (1) verbessern, wobei die Oberflächenzone in der Längsrichtung des Rotorblatts (1) sich im Wesentlichen längs der gesamten Länge des Wurzelbereichs (2) erstreckt.

2. Rotorblatt nach Anspruch 1,
wobei die Oberflächenzone eine Vielzahl von Vertiefungen (7) und/oder Vorsprüngen in der Querrichtung des Rotorblatts aufweist.

3. Rotorblatt nach Anspruch 1 oder 2,
wobei die Oberflächenzone nur Vertiefungen, beispielsweise in Form von Grübchen oder Dimples aufweist.

4. Rotorblatt nach einem der Ansprüche 1 bis 3,
**dadurch gekennzeichnet,**
**dass** die Oberflächenzone ein erstes Zonensegment (8) und ein zweites Zonensegment (9) bei Betrachtung in Winkelrichtung aufweist, wobei das erste Zonensegment (8) und das zweite Zonensegment (9) sich zumindest über einen Bereich von 30° bis 150° bzw. von -30° bis -150°, oder von 60° bis 135° bzw. von -60° bis -135°, oder von 60° bis 120° bzw. -60° bis -120° erstrecken, wobei die Linie von der Längsachse (10) zu der vorderen Kante (5) mit 0° definiert ist und die Linie von der Längsachse (10) zur hinteren Kante (6) mit 180° definiert ist.

5. Rotorblatt nach einem der Ansprüche 2 bis 4,
**dadurch gekennzeichnet,**
**dass** die Oberflächenzone sich in den Übergangsbereich (3) hinein erstreckt.

6. Rotorblatt nach Anspruch 4 oder 5,
**dadurch gekennzeichnet,**
**dass** das erste Zonensegment (8) und das zweite Zonensegment (9) in dem Übergangsbereich (3) um einen Punkt herum quer zu der Sehnenebene (K) angeordnet sind, wo das Profil des Übergangsbereiches (3) die größte Dicke besitzt.

7. Rotorblatt nach Anspruch 5 oder 6,
**dadurch gekennzeichnet,**
**dass** zumindest ein Bereich des Tragflächenbereiches (4), der sich am nächsten an der Nabe befindet, mit einer Vielzahl von Vertiefungen (7) und/oder Vorsprüngen versehen ist.

8. Rotorblatt nach einem der vorherigen Ansprüche,
**dadurch gekennzeichnet,**
**dass** die Oberflächenzone eine Vielzahl von im Wesentlichen gleichförmigen Vertiefungen (7) oder Vorsprüngen aufweist.

9. Rotorblatt nach einem der vorherigen Ansprüche,
**dadurch gekennzeichnet,**
**dass** die Oberflächenzone eine Vielzahl von im Wesentlichen kreisförmigen, konkaven Vertiefungen aufweist.

10. Rotorblatt nach einem der vorherigen Ansprüche,
**dadurch gekennzeichnet,**
**dass** die Oberflächenzone eine Vielzahl von hexagonalen Vertiefungen aufweist.

11. Rotorblatt nach einem der vorherigen Ansprüche,
**dadurch gekennzeichnet,**
**dass** die Vertiefungen (7) und/oder Vorsprünge eine Breite von 2 mm bis 100 mm, 3 mm bis 50 mm oder 4 mm bis 20 mm sowie eine Tiefe von 1 mm bis 20 mm, 1 mm bis 10 mm oder 1 mm bis 5 mm aufweisen.

12. Rotorblatt nach einem der vorherigen Ansprüche,
**dadurch gekennzeichnet,**
**dass** die Vertiefungen (7) in der Oberfläche des Rotorblatts (1) als Aussparungen ausgebildet sind.

13. Rotorblatt nach einem der Ansprüche 1 bis 11,
**dadurch gekennzeichnet,**
**dass** die Vertiefungen (7) und/oder Vorsprünge Teil einer Abdeckung, beispielsweise eines Bandes oder einer Folie sind, die auf der Oberfläche des Rotorblatts vorgesehen ist.

## Revendications

1. Pale (1) pour un rotor d'éolienne ayant un arbre de rotor sensiblement horizontal, ledit rotor comprenant un moyeu, dans laquelle, observée dans la direction longitudinale le long d'un axe longitudinal (10), la pale (1) comprend la zone d'emplanture (2) la plus proche du moyeu, la zone de surface portante (4) la plus éloignée du moyeu et facultativement une zone de transition (3) entre la zone d'emplanture (2) et la zone de surface portante (4), et dans laquelle, observée dans une direction transversale, ladite pale (1) comprend un bord d'attaque (5) et un bord de fuite (6) ainsi qu'un plan de corde (K) s'étendant entre le bord d'attaque (5) et le bord de fuite (6) de la pale (1), dans laquelle la zone d'emplanture (2) a une section transversale sensiblement circulaire, **caractérisée en ce qu'**une zone de surface avec une pluralité d'indentations (7) et/ou de saillies est prévue au moins dans la zone d'emplanture (2), lesdites indentations et/ou saillies étant formées et dimensionnées pour améliorer le flux du vent sur la surface de la pale (1), dans laquelle la zone de surface dans la direction longitudinale de la pale (1) s'étend sensiblement le long de toute la longueur de la zone d'emplanture (2).

2. Pale selon la revendication 1, dans laquelle la zone de surface comprend une pluralité d'indentations (7) et/ou de saillies dans la direction transversale de la pale.

3. Pale selon la revendication 1 ou 2, dans laquelle la zone de surface comprend uniquement des indentations, telles que des dépressions.

4. Pale selon l'une quelconque des revendications 1 à 3, **caractérisée en ce que** la zone de surface comprend un premier segment de zone (8) et un deuxième segment de zone (9), observés dans la direction angulaire, où le premier (8) et le deuxième (9) segment de zone s'étendent au moins de 30 à 150 degrés et de -30 à -150 degrés, respectivement, ou de 60 à 135 degrés et de -60 à -135 degrés respectivement, ou de 60 à 120 degrés et de -60 à -120 degrés respectivement, où la ligne allant de l'axe longitudinal (10) au bord d'attaque (5) est définie comme étant de 0 degré, et la ligne allant de l'axe longitudinal (10) au bord de fuite (6) est définie comme étant de 180 degrés.

5. Pale selon l'une quelconque des revendications 2 à 4, **caractérisée en ce que** la zone de surface s'étend dans la zone de transition (3).

6. Pale selon la revendication 4 ou 5, **caractérisée en ce que** le premier segment de zone (8) et le deuxième segment de zone (9) dans la zone de transition (3) sont positionnés autour du point transversal par rapport au plan de corde (K), où le profil de la zone de transition (3) a la plus grande épaisseur.

7. Pale selon la revendication 5 ou 6, **caractérisée en ce qu'**au moins une partie de la zone de surface portante (4) située le plus à proximité du moyeu, est prévue avec une pluralité d'indentations (7) et/ou de saillies.

8. Pale selon l'une quelconque des revendications précédentes, **caractérisée en ce que** la zone de surface comprend une pluralité d'indentations (7) ou de saillies sensiblement uniformes.

9. Pale selon l'une quelconque des revendications précédentes, **caractérisée en ce que** la zone de surface comprend une pluralité d'indentations concaves sensiblement circulaires.

10. Pale selon l'une quelconque des revendications précédentes, **caractérisée en ce que** la zone de surface comprend une pluralité d'indentations hexagonales.

11. Pale selon l'une quelconque des revendications précédentes, **caractérisée en ce que** les indentations (7) et/ou les saillies ont une largeur de 2-100 mm, 3-50 mm ou 4-20 mm et une profondeur de 1-20 mm, 1-10 ou 1-5 mm.

12. Pale selon l'une quelconque des revendications précédentes, **caractérisée en ce que** les indentations (7) sont enfoncées sur la surface de la pale (1).

13. Pale selon l'une quelconque des revendications 1 à 11, **caractérisée en ce que** les indentations (7) et/ou les saillies font partie d'un recouvrement, tel qu'une bande ou un film, prévu(e) sur la surface de la pale.
